# EUROPEAN PATENT SPECIFICATION

(11) **EP 0 504 246 B1**
(45) Date of publication and mention of the grant of the patent: **11.09.1996**
(21) Application number: 91900893.8
(22) Date of filing: 07.12.1990
(51) Int. Cl.: B60P 1/64

(54) **A BODY REPLACEMENT SYSTEM FOR MOTOR VEHICLES**
ANLAGE ZUM AUSWECHSELN EINES KÖRPERS FÜR MOTORFAHRZEUGE
SYSTEME DE CHARGEMENT ET DECHARGEMENT POUR VEHICULES A MOTEUR

(30) Priority: 07.12.1989 GB 8927667
(43) Date of publication of application: 23.09.1992
(73) Proprietor: RITSON, Peter Alvin, Oxton, Birkenhead, Merseyside L43 6UD (GB)
(72) Inventor: RITSON, Peter Alvin, Oxton, Birkenhead, Merseyside L43 6UD (GB)
(74) Representative: Wombwell, Francis
(86) International application number: GB9001915
(87) International publication number: WO9108925

(56) References cited:
- FR-A- 2 156 988
- FR-A- 2 239 407
- GB-A- 1 159 305
- GB-A- 2 181 715
- US-A- 3 229 839

## Description

The present invention relates to a body replacement system for vehicles, in which a variety of different body types can be provided for attachment to a goods vehicle chassis and which can be readily exchanged with a variety of body types to enable a single vehicle chassis to be utilised for a variety of purposes. In addition, the arrangement of the invention could be utilised for enabling loading and unloading of one or more appropriately adapted containers without recourse to the use of overhead cranes or the like.

At present, vehicles are manufactured having a standard front cab or driving cab and one of a variety of standard rear body types, including for example a box-cab, a luton-cab, a flatdeck, a flatdeck with drop sides, or a tipper. In addition, a plurality of specialised rear bodies can be supplied to order. Examples of the latter include refrigerated rear bodies, bowsers and the like for liquid or bulk material, livestock carrying bodies or minibuses, to name but a few. As a consequence, since each individual body type is normally provided as an integral part of the rear portion of the vehicle, each vehicle is generally suitable only for the purpose for which it was designed. Therefore, a user of a variety of different types of vehicle would require to have a number of each vehicle type for his purposes, even though all of the vehicles may not be fully utilised at all times, but would have to be readily available when needed. Such an arrangement can involve a considerable capital outlay for a fleet user and in order to bridge such gap, many fleet users use the facility of hire companies to top up their requirements for limited periods to minimise the capital costs involved in the operation of their business. Similarly, fleet hire companies need to maintain a wide variety of different types of vehicle to be able to fulfil the demands of their customers, and during quiet periods many of the vehicles are laid up, which does not provide a particularly good return of the capital investment in the vehicles.

With larger vehicles, this problem has been largely overcome by the use of articulated vehicles, in which a separate trailer and tractor unit are provided, so that the tractor unit can be detached from the trailer and may then be coupled to an alternative trailer, according to requirements. However, such a solution has not been applied to mid-range types of commercial or goods vehicles for reasons of cost.

Demountable backcabs are known in the caravan art, in which the accommodation portion is provided with legs, which can be lowered, or attached, so that the accommodation portion can be detached from the driving cab, which may then be utilised as a small pick-up vehicle or the like. However, this principle has not been extended, to any large extent to commercial vehicles, due to the fact that existing arrangements have the disadvantage that they should be parked on firm level ground and be readily accessible to enable the drive cab to be backed on to the rear body, which in itself can be a difficult job due to the accuracy required of the driver in backing onto the rear body to ensure correct alignment. Further, when such an accommodation unit is on legs, it can provide an obstruction, particularly since it cannot be readily moved without its drive cab being reattached.

Examples of some prior art arrangements are shown in British Patent Nos. 1202828, 1169911 and 2181715 (this latter corresponding to the preamble of claim 1), all of which disclose arrangements for enabling loading and unloading of load platforms onto vehicles, but each of which requires the use of a tipper frame on the chassis of the vehicle combined with winches, the tipper frame being required to enable unloading of the load platform, utilising the weight of the platform itself, the incline also enabling the load platform to be pulled up the incline during loading and subsequently lowered into position. Whilst such an arrangement provides a workable system, such requires the provision of a tipper frame to be provided on the vehicle chassis, which unnecessarily increases the cost of the vehicle chassis, since for a large percentage of the uses to which the vehicle could be put may not require the provision of a tipping mechanism.

It is the object of the present invention to provide a demountable body system for motor vehicles, particularly goods vehicles, which overcomes the disadvantages of prior art arrangements and provides for the convenient and cost-effective use of a variety of vehicle body types.

According to the present invention there is provided a vehicle body exchange system for commercial or goods vehicles, comprising a support frame attachable to or integrally formed with a vehicle chassis or mounted on a vehicle, means mounted on the support frame or vehicle chassis, for enabling mounting or demounting of a rear body onto or from support frame and means for securely attaching said rear body to said support frame, characterised by the mounting/demounting means comprising a winch mechanism comprising an endless chain or cable drive including a first coupling member comprising a fly-cable or chain attached to said endless chain or cable of said winch mechanism, said fly-cable or chain being of a length corresponding to at least the height of the support frame above the ground level, for coupling to a rear body to enable such to be lifted from the ground or lowered to the ground during a mounting or demounting operation, respectively, and a second coupling means, mounted on the support frame or vehicle chassis, comprising a second cable, selectively drivable via a clutch mechanism, and which is attachable to said rear body for enabling rearward displacement of the body from the support frame by means of the endless chain or cable winch mechanism to enable demounting thereof.

Preferably, the support frame comprises at least two guide rails or channel sections for receiving and guiding corresponding channels or guide rails of the selected rear body, and rollers or wheels may be provided in said guide rails or channels of said support frame or of the selected rear body, to enable the selected rear body to roll smoothly on the support frame, during mounting or demounting operations.

The present invention will now be described further with reference to the accompanying drawings, in which:-
Fig. 1 illustrates an arrangement according to the present invention; and
Fig. 2 illustrates the mounting/demounting means including the winch mechanism.

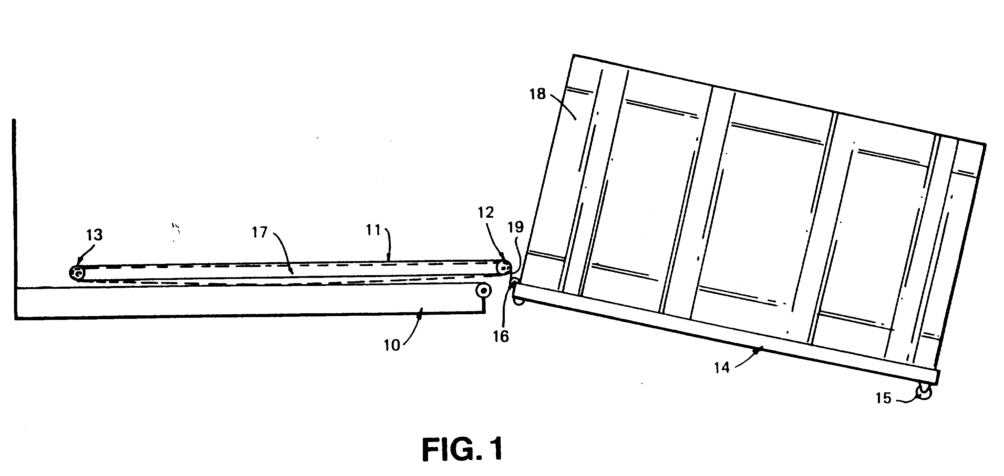

Referring firstly to Fig. 1, which is a schematic drawing illustrating the principle of the apparatus of the present invention, a vehicle chassis 10 is shown upon which is mounted a mounting/demounting winch system 11 comprising a traction means in the form of a chain or cable extending from the rear portion of the vehicle chassis to a forward portion between guide rails or channels 17 comprising a support frame secured to the vehicle chassis 10. The traction means is preferably an endless chain, driven electrically or hydraulically, but also possibly by means of a hand winch, if a suitable power supply is not available, or a combination of these according to the availability of suitable power sources, said chain passing over end sprockets or pulleys 12 and 13 secured to the support frame mounted on the chassis 10. The removable rear body 18 is provided with corresponded guide rails or channels 14 for slidably engaging the channels or rails 17 provided on the vehicle chassis. In addition, at the rear end of the rear vehicle body a rear roller 15, which may be detachable or retractable, is preferably provided to enable the rear body 18 to roll over the ground surface during mounting or demounting of the rear body. At the forward end of the rear body 18 a coupling arrangement 16 is provided, firstly for enabling connection of a coupling 19 from the chain traction mechanism to be connected for raising and lowering the rear body onto the support frame, and secondly, for enabling such to be securely affixed at the forward end when positioned on the support frame ready for use. Rollers or wheels are preferably provided in said guide rails or channels 14 and/or 17 to enable the demountable rear body to roll smoothly on the support frame during mounting or demounting thereof.

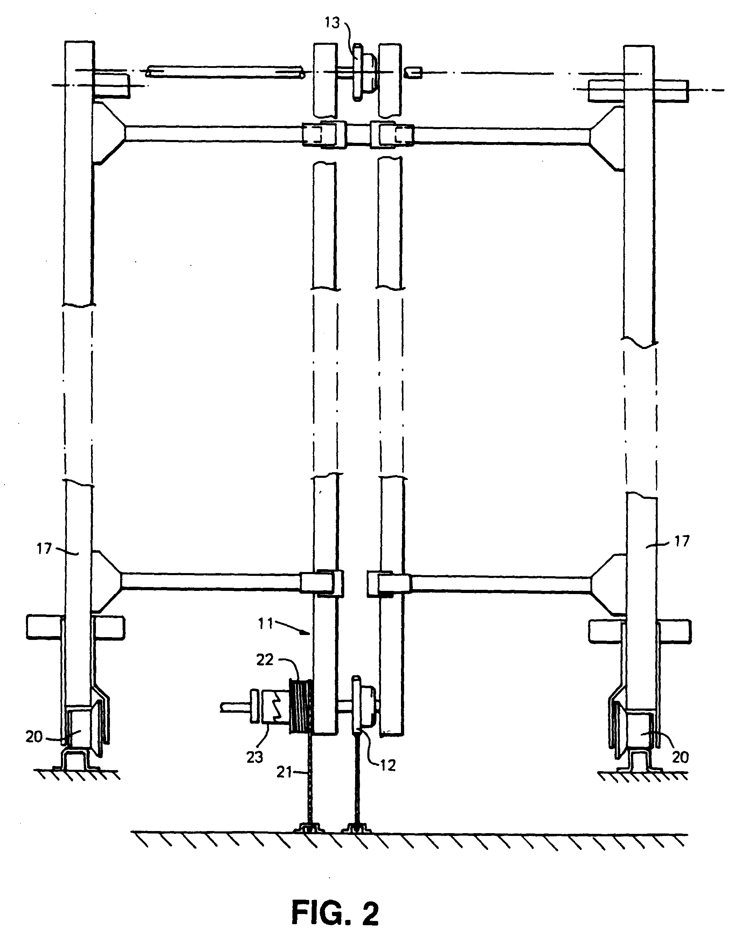

Referring now to Fig. 2, the guide rails 17 and rear rollers 20 can be seen, between which the mounting/demounting winch system 11 comprising front and rear drive sprockets or pulleys 12 and 13 over which runs the endless chain or cable driven thereby, is provided. To the endless cable or chain is connected a coupling 19 comprising a fly-cable (see Fig. 1) the length of which corresponds to at least the height of the support frame above ground level and is preferably slightly longer to enable an amount of slack to be provided for coupling and uncoupling purposes. In addition, a second coupling to the rear body 18 is provided, to which a cable 21 is attached, which is wound onto a drum 22, associated with a dog clutch 23 mounted on the drive shaft of rear sprocket or pulley 12. This second cable 21 is attached to the forward end of the rear body following initially lifting on of the forward end of the rear body onto the guide rails 17, and as the rear body 18 is pulled onto the support frame, the cable 21 is paid out, with the dog clutch 23 disengaged. For demounting the rear body, the dog clutch 23 is engaged and driven rearwardly together with the drive chain mechanism, the cable 21 acting to pull the vehicle body rearwardly and is then disengaged to enable the rear body to be lowered from the support frame by the fly-cable 19, attached to the drive chain and when the rear body has been lowered to the ground, the fly-cable is disconnected, the cables then can be secured and the vehicle may then be driven off, for example to collect an alternative rear body.

The rear body 18 is provided with additional rollers at the forward end of the guide channels 14 to enable such to be manoeuvred to a limited extent, and indeed the provision of the guide rails or channels on the lower portion of the rear body 18 enables access for the forklift truck or the like, to enable such to be moved, for example within a vehicle depot or the like. Further, such a facility enables the body portions to be stored in a space saving manner, which can be particularly important where space is at a a premium. Thus, a single tractor or drive unit can be utilised with a variety of bodies, thereby minimising capital costs in a fleet situation.

Whilst the arrangement is designed to enable the rear body to be picked up from and lowered onto the ground, the system could equally be utilised with loading bays in which the vehicle body is already positioned at or near the appropriate height for loading onto the rear support frame of the vehicle, in which case the winch action would operate in a similar manner as described above, but would merely pull the rear body portion onto the support frame. It will be appreciated that a wide variety of rearbodies can be provided, including specialist vehicles. For additional security, particularly with heavy rear units, for example, incorporating tipper units or even a concrete mixer or compressors or bowsers which can be relatively heavy, then additional securing means may be provided, particularly in the front portion of the rear body which could be locked onto the vehicle chassis or sub-frame with a suitable locking pin or the like and, if necessary, connected up to hydraulic power take-off systems of the vehicle or electrical power supplies, as appropriate.

Whilst the invention has been described with reference to the mounting or demounting of a single rear body member to a vehicle chassis, similar mounting and demounting systems could be provided on railway goods vehicles, which could alternatively be accessed from one side, so that several of these could be provided in the form of containers, which could be offloaded laterally onto small trucks and then taken to a depot to be collected by a fleet of road vehicles adapted according to the invention, the containers then being loaded in the normal manner onto the rear of such vehicles for local distribution. Such an arrangement avoids the very high capital outlay which would be required for a similar system utilising conventional types of containers. Similarly, such types of containers could equally be provided for loading onto the trailer of an articulated vehicle, preferably adapted as a low-loader to enable a number of such rear body portions to be transported large distances by road on such articulated vehicles and then again collected by smaller vehicles for local deliveries.

Whilst the preferred arrangement utilises an endless chain mechanism, such could be replaced by a split winch mechanism in which the two halves of the winch can be driven either in the same direction or opposite directions to enable an loading and unloading sequence to be performed, in that when the two halves of the winch are rotated in opposite directions, a loop of cable can be provided for coupling to the front of a rear body to be mounted on the support frame, such that, when the winch is operated to take up the loop, the front end of the rear body is lifted onto the rear of the support frame and then pulled up onto the support frame.

The operation of the preferred arrangement of the present invention can be summarised as follows. Firstly, a vehicle is positioned in front of a rear body to be mounted and the fly-cable 19 is attached to the front of the rear body 18. The mounting/demounting chain winch mechanism 11 is activated to tighten the fly-cable thereby gradually raising the front portion of the rear body 18 off the ground, the rear portion being allowed to roll over the ground on the rear roller 15. As the chain drive mechanism 11 continues to function, the guide rails 14 are engaged with the side rails 17, initially over the rollers 20. At this point the secondary coupling cable 21 is attached, with the dog clutch 23 disengaged and the winch mechanism 11 continues to draw the rear body forwardly. As the coupling point of the fly-cable progresses forwardly, it also causes the rear body to gradually pivot downwardly onto the guide rails 17 lifting the rear roller 15 off the ground and the rear body 18 is then pulled gradually fully onto the support frame and appropriate securing means are engaged.

To reverse the process, the winch mechanism 11 is reversed and with the dog clutch 23 engaged, the cable 21 is progressively rewound back onto drum 22, displacing the rear body rearwardly and as the chain drive progresses rearwardly in concert therewith, as the centre of gravity of the rear body moves rearwardly, such progressively pivots about the rear rollers 20 under the control of the fly-cable 19, until the rear roller 15 engages the ground. The rear body 18 is progressively pulled back until such reaches a point at which the secondary coupling cable 21 can be detached and then the chain winch continues to gradually lower the front portion of the rear body to the ground, the fly-cable 19 then being disconnected to enable the vehicle to drive away.

## Claims

1. A vehicle body exchange system for commercial or goods vehicles, comprising a support frame attachable to or integrally formed with a vehicle chassis or mounted on a vehicle, means mounted on the support frame or vehicle chassis, for enabling mounting or demounting of a rear body onto or from said support frame and means for securely attaching said rear body to said support frame, the mounting/demounting means comprising a winch mechanism (11) comprising an endless chain or cable drive including a first coupling member comprising a fly-cable (19) or chain attached to said endless chain or cable of said winch mechanism (11), and attachable to a forward end (16) of the rear body, said fly-cable (19) or chain being of a length corresponding to at least the height of the support frame above the ground level, for coupling to said rear body (18) to enable such to be lifted from the ground or lowered to the ground during a mounting or demounting operation, respectively, and characterised by a second coupling means (21), mounted on the support frame or vehicle chassis, comprising a second cable, selectively drivable by said endless chain or cable drive via a clutch mechanism (23), and which is attachable to said forward end (16) of said rear body for enabling rearward displacement of the body from the support frame by means of the endless chain or cable winch mechanism (11) to enable demounting thereof.

2. A vehicle body exchange system as claimed in claim 1, wherein the support frame comprises at least two guide rails or channels (17) for receiving and guiding corresponding channels or guide rails (14) of a rear body (18).

3. A vehicle body exchange system as claimed in claim 2, in which rollers or wheels (20) are provided in said guide rails or channels (14, 17) of the support frame or of the demountable rear body to enable the rear body (18) to roll smoothly on the support frame during mounting or demounting thereof.

4. A vehicle body exchange system as claimed in any preceding claim, in which the winch mechanism (11) is driven by either a hand winch or electric or hydraulic motors or a combination of these according to the availability of suitable power sources.

5. A vehicle body exchange system as claimed in any preceding claim, in which locking means are provided attached either to the rear body (18) or the vehicle chassis (10) to enable the rear body to be securely attached to the vehicle, in use.

6. A vehicle body exchange system as claimed in any preceding claim, in which rollers are provided at the rear of the support frame to facilitate mounting or demounting of the rear body (18).

7. A vehicle body exchange system as claimed in any preceding claim, wherein rear wheels or rollers (15) are provided on the rear body (18) to enable such to roll over the ground during mounting or demounting operations.

8. A vehicle body exchange system as claimed in any preceding claim, in which said clutch mechanism is a dog clutch (23) mounted on a common shaft with the drive of the endless chain mechanism.

9. A vehicle body exchange system as claimed in claim 1 in which the cable winch mechanism comprises a split winch, by means of which the two halves of the winch may be rotated in opposite directions, so that a loop of cable can be provided for coupling to the front of a rear body, such that when the winch is operated to take up the loop, the front end of the rear body is lifted onto the rear of the support frame and subsequently pulled up onto the support frame.

## Patentansprüche

1. Fahrzeugaufbau-Wechselsystem für Geschäfts- oder Lastfahrzeuge mit einem Trägerrahmen, der an einem Fahrzeugchassis befestigbar oder einstückig mit diesem ausgebildet ist oder an einem Fahrzeug montiert ist, einer am Trägerrahmen oder am Fahrzeugchassis montierten Einrichtung, die das Montieren oder Demontieren eines hinteren Aufbaus auf dem Trägerrahmen oder von diesem ermöglicht, und einer Einrichtung zum sicheren Befestigen des hinteren Aufbaus am Trägerrahmen, wobei die Montage-/Demontageeinrichtung einen Windenmechanismus (11) mit einem Antrieb für eine Endloskette oder ein Kabel aufweist, mit einem ersten Verbindungselement mit einem einseitig losen Kabel (19) oder einer Kette, das bzw. die an der Endloskette oder dem Kabel des Windenmechanismus (11) befestigt ist und am Vorderende (16) des hinteren Aufbaus befestigbar ist, wobei das einseitig lose Kabel (19) oder die Kette eine Länge aufweist, die mindestens der Höhe des Trägerrahmens über dem Untergrundniveau entspricht, um eine Verbindung zum hinteren Aufbau (18) herzustellen, damit dieser während eines Montage- oder Demontagevorgangs vom Untergrund angehoben bzw. auf diesen abgesenkt werden kann, **gekennzeichnet durch** eine zweite Verbindungseinrichtung (21), die am Trägerrahmen oder Fahrzeugchassis montiert ist und ein zweites Kabel aufweist, das wahlweise vom Antrieb für die endlose Kette oder das Kabel über einen Kupplungsmechanismus (23) antreibbar ist und das am Vorderende (16) des hinteren Aufbaus befestigbar ist, um eine Verschiebung des Aufbaus vom Trägerrahmen nach hinten mittels des Windenmechanismus (11) mit endloser Kette oder Kabel zu ermöglichen, um die Demontage desselben zu ermöglichen.

2. Fahrzeugaufbau-Wechselsystem nach Anspruch 1, bei dem der Trägerrahmen mindestens zwei Führungsschienen oder Kanäle (17) zum Aufnehmen und Führen entsprechender Kanäle oder Führungsschienen (14) eines hinteren Aufbaus (18) aufweist.

3. Fahrzeugaufbau-Wechselsystem nach Anspruch 2, bei dem Rollen oder Räder (20) in den Führungsschienen oder Kanälen (14, 17) des Trägerrahmens oder des demontierbaren hinteren Aufbaus vorhanden sind, damit der hintere Aufbau (18) während seiner Montage oder Demontage gleichmäßig auf dem Trägerrahmen rollen kann.

4. Fahrzeugaufbau-Wechselsystem nach einem der vorstehenden Ansprüche, bei dem der Windenmechanismus (11) entweder durch eine Handkurbel oder durch Elektro- oder Hydraulikmotoren oder eine Kombination derselben abhängig von der Verfügbarkeit einer geeigneten Energiequelle angetrieben wird.

5. Fahrzeugaufbau-Wechselsystem nach einem der vorstehenden Ansprüche, bei dem eine Verriegelungseinrichtung vorhanden ist, die entweder am hinteren Aufbau (18) oder am Fahrzeugchassis (10) befestigt ist, damit der hintere Aufbau im Gebrauch sicher am Fahrzeug befestigt werden kann.

6. Fahrzeugaufbau-Wechselsystem nach einem der vorstehenden Ansprüche, bei dem an der Hinterseite des Trägerrahmens Rollen vorhanden sind, um eine Montage oder Demontage des hinteren Aufbaus (18) zu erleichtern.

7. Fahrzeugaufbau-Wechselsystem nach einem der vorstehenden Ansprüche, bei dem am hinteren Aufbau (18) hintere Räder oder Rollen (15) vorhanden sind, um ein Rollen desselben während Montage- oder Demontagevorgängen über den Untergrund zu ermöglichen.

8. Fahrzeugaufbau-Wechselsystem nach einem der vorstehenden Ansprüche, bei dem der Kupplungsmechanismus eine Klauenkupplung (23) ist, die auf einer Achse angebracht ist, die dem Antrieb des Endloskettenmechanismus gemeinsam ist.

9. Fahrzeugaufbau-Wechselsystem nach Anspruch 1, bei dem der Kabelwindenmechanismus eine unterteilte Winde aufweist, bei der die zwei Hälften in entgegengesetzten Richtungen gedreht werden können, so daß eine Kabelschleife für Verbindung mit der Vorderseite eines hinteren Aufbaus gebildet werden kann, so daß dann, wenn die Winde zum Aufnehmen der Schleife betrieben wird, das Vorderende des hinteren Aufbaus auf die Rückseite des Trägerrahmens angehoben wird und anschließend auf den Trägerrahmen hochgezogen wird.

## Revendications

1. Système d'échange de carrosserie de véhicule pour des véhicules commerciaux ou de marchandises, comprenant un cadre de support pouvant être fixé à un châssis de véhicule, ou d'un seul tenant avec ce dernier, ou monté sur un véhicule, des moyens montés sur le cadre de support ou le châssis de véhicule, pour permettre le montage d'une carrosserie arrière sur ledit cadre de support, ou son démontage dudit cadre de support, et des moyens pour fixer solidement ladite carrosserie arrière audit cadre de support, les moyens de montage/démontage comprenant un mécanisme à treuil (11) comprenant une chaîne ou câble sans fin d'entraînement incluant un premier élément d'accouplement comprenant un câble volant (19) ou une chaîne fixée à ladite chaîne ou câble sans fin dudit mécanisme à treuil (11), et pouvant être fixé à une extrémité avant (16) de la carrosserie arrière, ledit câble volant (19) ou chaîne étant d'une longueur correspondant à au moins la hauteur du cadre de support au-dessus du niveau du sol, pour accouplement à ladite carrosserie arrière (18) pour permettre à cette dernière d'être respectivement soulevée à partir du sol ou d'être abaissée vers le sol pendant une opération de montage ou de démontage, et caractérisé par un second moyen d'accouplement (21), monté sur le cadre de support ou châssis du véhicule, comprenant un second câble, pouvant être entraîné, de manière sélective, par ladite chaîne sans fin ou câble d'entraînement par l'intermédiaire d'un mécanisme d'embrayage (23), et qui peut être fixé à ladite extrémité avant (16) de ladite carrosserie arrière pour permettre le déplacement arrière de la carrosserie à partir du cadre de support au moyen de la chaîne ou câble sans fin du mécanisme à treuil (11) pour permettre le démontage de cette dernière.

2. Système d'échange de carrosserie de véhicule selon la revendication 1, dans lequel le cadre de support comprend au moins deux rails ou profilés de guidage (17) pour recevoir et guider des profilés ou rails de guidage correspondants (14) d'une carrosserie arrière (18).

3. Système d'échange de carrosserie de véhicule selon la revendication 2, dans lequel des rouleaux ou roues (20) sont disposés dans lesdits rails ou profilés de guidage (14, 17) du cadre de support ou de la carrosserie arrière démontable pour permettre à la carrosserie arrière (18) de rouler doucement sur le cadre de support pendant le montage ou le démontage de cette dernière.

4. Système d'échange de carrosserie de véhicule selon l'une quelconque des revendications précédentes, dans lequel le mécanisme à treuil (11) est entraîné soit par un treuil manuel soit par des moteurs électriques ou hydrauliques ou par une combinaison de ces derniers selon la disponibilité de sources de courant appropriées.

5. Système d'échange de carrosserie de véhicule selon l'une quelconque des revendications précédentes, dans lequel des moyens de verrouillage sont prévus en étant fixés soit à la carrosserie arrière (18) soit au châssis du véhicule (10) pour permettre à la carrosserie arrière d'être solidement fixée au véhicule, lors de l'utilisation.

6. Système d'échange de carrosserie de véhicule selon l'une quelconque des revendications précédentes, dans lequel des rouleaux sont disposés au niveau de l'arrière du cadre de support pour faciliter le montage ou le démontage de la carrosserie arrière (18).

7. Système d'échange de carrosserie de véhicule selon l'une quelconque des revendications précédentes, dans lequel des rouleaux ou roues arrière (15) sont disposés sur la carrosserie arrière (18) pour permettre à cette dernière de rouler sur le sol pendant les opérations de montage ou de démontage.

8. Système d'échange de carrosserie de véhicule selon l'une quelconque des revendications précédentes, dans lequel ledit mécanisme d'embrayage est un embrayage à griffes (23) monté sur un arbre commun à l'entraînement du mécanisme à chaîne sans fin.

9. Système d'échange de carrosserie de véhicule selon la revendication 1, dans lequel le mécanisme à treuil à câble est constitué par un double treuil, au moyen duquel les deux moitiés du treuil peuvent être tournées dans des sens opposés, de sorte qu'une boucle de câble peut être prévue pour un accouplement à l'avant d'une carrosserie arrière, de manière que lorsque le treuil est mis en oeuvre pour enrouler la boucle, l'extrémité avant de la carrosserie arrière est soulevée sur l'arrière du cadre de support et est ensuite tirée sur le cadre de support.
